# FASCICULE DE BREVET EUROPEEN

(11) **EP 0 385 892 B1**
(45) Date de publication et mention de la délivrance du brevet: **28.07.1993**
(21) Numéro de dépôt: 90420103.5
(22) Date de dépôt: 27.02.1990
(51) Int. Cl.: A61C 13/30

(54) **Prothèse de reconstitution d'une dent dévitalisée**
Prothese für die Wiederherstellung eines toten Zahnes
Prothesis for the restoration of a devitalized tooth

(30) Priorité: 02.03.1989 FR 8903001
(43) Date de publication de la demande: 05.09.1990
(73) Titulaire: Bernadat, Georges, F-69360 Saint Symphorien D'ozon (FR)
(72) Inventeur: Bernadat, Georges, F-69360 Saint Symphorien D'ozon (FR)
(74) Mandataire: Perrier, Jean-Pierre

(56) Documents cités:
- EP-A- 0 299 919
- FR-A- 2 588 181
- GB-A- 2 162 068

## Description

Il est connu qu'à la suite de sa dévitalisation, une dent perd une partie de son élasticité et de sa résistance. Elle devient plus fragile, en raison de la perte de sa trame protéique et encore davantage lorsqu'elle comporte un ancrage radiculaire pour une reconstitution prothétique. En effet, dans ce cas, sous les effets des efforts s'exerçant sur le moignon prothétique, le plan de joint moignon/dent tend à s'ouvrir en transformant la répartition uniforme des efforts en effort localisé qui est d'autant plus élevé qu'il est décalé par rapport au tenon d'ancrage. Il en résulte que la dent est soumise à un effort localisé important entrainant parfois sa brisure. De plus, la simple ouverture du joint permet la pénétration de produits buccaux qui peuvent entrainer une récidive de la carie sur ce qui reste de la dent. Même si le pourcentage de dents se brisant est faible, un tel incident est d'autant plus gênant qu'il s'effectue sur une dent à la base d'une reconstitution prothétique complexe et onéreuse.

Il apparait donc qu'il se pose le problème de savoir comment redonner une résistance mécanique optimale à une dent dévitalisée avant d'envisager toute construction prothétique.

Actuellement, pour reconstruire une dent dévitalisée avec un ancrage radiculaire, on dispose de plusieurs moyens. L'un d'eux consiste à introduire et sceller une petite vis dans le canal radiculaire et à tasser sur elle, un amalgame ou un composite en utilisant une bague comme coffrage.

Dans d'autres constructions, la vis est remplacée par un tenon conique ou cylindro-conique scellé dans le canal radiculaire et faisant, ou non, partie de la reconstitution prothétique.

Malheureusement, aucune de ces constructions ne contribue au renforcement de la dent, qu'elles fragilisent au contraire.

Si de meilleurs résultats sont obtenus avec des ciments de scellement en verre ionomère, ceux-ci sont encore bien insuffisants et n'empêchent pas la fracture de la dent.

On connaît aussi, par FR.A. 2 588 181, une prothèse dans laquelle un fourreau en matière composite est bloqué dans la lumière canalaire par introduction d'un tenon en matériau composite ou autre.

La présente invention est relative a une prothèse permettant de renforcer une dent dévitalisée, c'est à dire d'augmenter sa résistance mécanique, simultanément, ou non, à une reconstruction du moignon ou de la couronne.

Cette prothèse est du type comprenant, d'une part, un tenon destiné à être introduit dans la lumière canalaire de la dent et dont l'extrémité dépassant de celle-ci est associée à une reconstitution externe, avec couronne ou similaire, et, d'autre fpart, un fourreau s'interposant entre le tenon et la paroi de la lumière canalaire.

Selon l'invention, le fourreau de cette prothèse est réalisé en fibres à grande résistance mécanique formant une structure déformable et poreuse à la résine, possède un chevelu externe et est associé à une résine, à faible tension superficielle, apte à recouvrir la paroi de la lumière canalaire, à combler les tubuli dentinaire, à imprégner les fibres du fourreau et à fixer le tenon, le fourreau et le chevelu à l'intérieur de la lumière canalaire, en vue de l'obtention d'une structure monobloc composite épousant la lumière canalaire.

Dans cette prothèse, le fourreau et son chevelu s'intégrant aisément dans la lumière canalaire, quel que soit le profil transversal de celle-ci, forment une armature dont la combinaison avec la résine constitue un complexe renforçant mécaniquement la racine et la dent traitée, de l'intérieur et plus spécialement dans le plan de joint dent/moignon. A cette action de renforcement s'ajoute celle procurée par la résine qui, assurant la liaison entre le fourreau et la paroi de la lumière, pénètre dans les tubuli dentinaires s'étendant, de façon connue, jusqu'à la couche hyaline précédent le cément.

Dans une forme de réalisation de l'invention, la résine d'obturation des tubuli dentinaires et de liaison du fourreau avec la lumière canalaire et le tenon, est choisie parmi celles ayant une réticulation anaérobie.

Une telle résine, qui ne subit lors de la polymérisation, ni expansion risquant de faire éclater la racine, ni retrait réduisant la tenue mécanique, procure une liaison homogène et stable dans le temps.

Dans une forme d'exécution, le tenon de la prothèse est composé d'un faisceau de segments tronconiques ou pyramidaux, juxtaposés à l'intérieur du fourreau , liés par la résine et répartis dans la lumière canalaire de manière qu'en section transversale leur courbe enveloppe soit voisine de celle de ladite lumière dans la même section transversale.

Ce tenon en faisceau épouse parfaitement le profil interne de la lumière canalaire naturelle, obtenue après dévitalisation et nettoyage, et évite d'avoir recours à un fraisage complémentaire pour réaliser une cavité de section circulaire, apte à recevoir un tenon de même section, fraisage réduisant l'épaisseur des parvis de la racine et la résistance mécanique de cette racine.

L'invention sera mieux comprise à l'aide de la description qui suit en référence au dessin schématique annexé représentant, à titre d'exemples non limitatifs, plusieurs formes d'exécution de cette prothèse de renforcement d'une dent dévitalisée, avec et sans reconstitution prothétique, et une forme d'exécution de l'appareil pour son implantation.
Figures 1 et 2 sont des vues en coupe longitudinale d'une racine, respectivement, dans la phase de préparation dentinaire et dans la phase de renforcement mécanique,
Figure 3 est une vue en coupe transversale montrant la répartition du chevelu dans la lumière canalaire,
Figures 4 et 5 sont des vues en coupe longitudinale,similaires aux figures 1 et 2, mais correspondant aux phases de mise en place du tenon et de reconstitution prothétique de la couronne,
Figures 6 et 7 sont des vues schématiques, en plan par dessus, montrant deux formes d'exécution d'une reconstitution prothétique de la couronne,
Figures 8 et 11 sont des vues en coupe transversale d'une racine montrant la forme interne des lumières canalaires les plus fréquemment rencontrées,
Figures 12 et 13 sont des vues de côté en élévation montrant deux formes d'exécution de segments, respectivement, pyramidal et tronconique, pour réalisation d'un tenon en faisceau,
Figure 14 est une vue en coupe longitudinale d'une dent reconstituée avec un tenon en faisceau,
Figures 15 et 16 sont des vues en coupe transversale de la dent de figure 14 avec les segments respectivement de figures 12 et 13,

Dans ces dessins, 2 désigne une dent dévitalisée dont l'accès à l'apex par la lumière canalaire 3, est condamné en 4, par exemple par un cône de gutta.

Avant toute reconstitution prothétique, mais après dévitalisation et nettoyage de la lumière canalaire, par des moyens mécaniques ou chimiques, il est procédé à une première phase de préparation dentinaire consistant à débarasser les canaux centrifuges 5, partant de la pulpe vers l'extérieur de la racine, de tous débris protéiques. Cette opération est réalisée en utilisant, non pas un acide mais une solution très concentrée, basique et caustique, telle que de la soude. Après lavage à l'eau, la dent est déshydratée en introduisant dans la lumière canalaire 3 un produit à faible tension superficielle et s'évaporant facilement, tel que de l'alcool. Il est alors procédé à la consolidation de la dentine, en introduisant, dans la lumière canalaire 3, une résine composite ayant une faible tension superficielle et pouvant donc aisément s'introduire dans les canaux centrifuges 5. De façon connue, le vide ou une surpression peuvent améliorer cette pénétration.

Avantageusement,la résine utilisée ici est choisie parmi celles ayant une réticulation anaréobie, procurant aucune expansion ni retrait, et par exemple un dimétacrylate de méthyl à réticulation anaérobie.

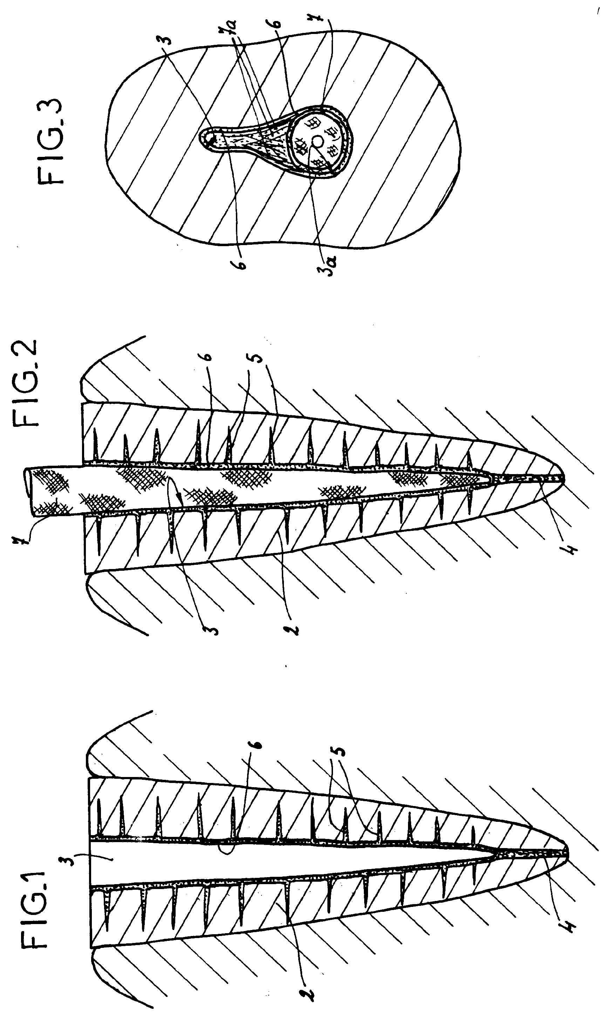

La figure 1 montre que la résine 6 n'est disposée que contre les parois de la lumière canalaire 3 et dans les tubuli dentaires ou canaux centrifuges 5 qui s'étendent jusqu'à la couche hyaline. Grâce à cela, après polymérisation, les caractéristiques mécaniques de la dentine sont augmentées.

Dans une phase suivante, représentée à la figure 2, il est procédé à la mise en place dans la lumière canalaire 3 d'un fourreau 7 transformant la lumière en un noyau de résistance. Ce fourreau 7,en forme de chaussette conique déformable est réalisé à partir d'une fibre ayant une grande résistance à la traction tels qu'en verre, en matériaux synthétiques et notamment en kevlar,ou autres. Cette fibre est tricotée ou tissée de manière à présenter une maille poreuse à la résine et, en l'occurence, à la résine 6 ayant une faible tension superficielle. Le fourreau est solidaire d'un chevelu externe 7a, composé de fibres longues extérieures. La figure 3 montre que ce chevelu 7 est disposé dans la partie de la lumière canalaire 3, non occupée par le fourreau 7, pour former avec la résine de liaison, un complexe de renforcement.

Dans la phase suivante, un tenon cylindrique à haute résistance mécanique, métallique ou autre, est introduit dans le fourreau 7, ayant sensiblement la même longueur que lui. Ce tenon a une structure s'opposant à l'arrachement, grâce à des rainures périphériques à profil angulaire en demi queue d'aronde. La liaison, fourreau-tenon, donc celle tenon et racine, est assurée par la même résine 6 que celle liant le fourreau avec la dentine, et suivant en cela des procédés connus.

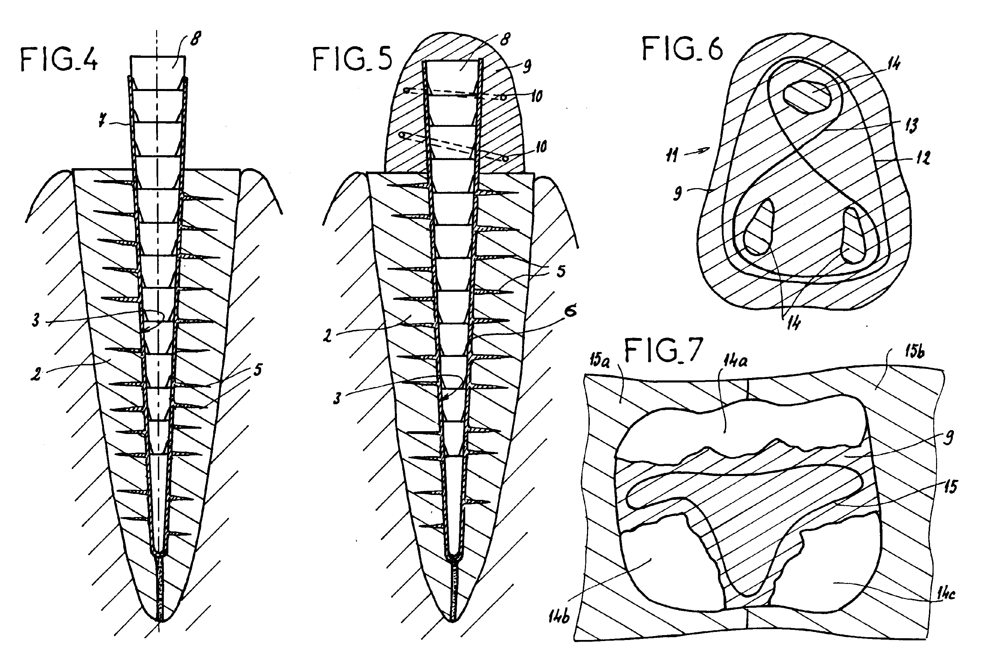

Dans la forme d'exécution représentée à la figure 4, le fourreau et le tenon dépassent de la racine sectionnée pour assurer la fixation d'un moignon prothétique ou d'une couronne réalisée hors bouche, mais il est évident qu'il peut être noyé dans la couronne lorsque celle-ci est conservée. La combinaison de la préparation dentinaire, de l'utilisation d'un fourreau 7 et de la mise en place d'un tenon 8 permet d'obtenir une augmentation importante de la résistance mécanique de la dent dévitalisée reconstituée.

Dans la forme d'exécution représentée à la figure 5, le renforcement de la racine est complété par une reconstruction du moignon suivant les mêmes techniques. A cet effet, comme le montre la figure 5, cette reconstruction est effectuée en reconstituant et en tassant, dans une bague ou matrice formant coffrage, des apports successifs de résine 9, identique ou différente de la résine 6, avec inclusion dans cette résine d'anneaux 10 en fibres synthétiques entourant le fourreau 7 et le tenon 8 et passant entre les fragments de couronne, s'il en reste.

La figure 6 montre la reconstitution d'une couronne 12 au moyen d'anneaux 12 et 13 ceinturant et enveloppant des fragments 14 de dents.

La figure 7 montre la reconstitution effectuée sur une couronne avec trois fragments 14a, 14b et 14c, au moyen d'anneaux 15 disposés entre ces moignons et noyés dans la résine 9. Sur cette figure, 15a-15b désignent deux demi-bagues constituant coffrage pour la reconstitution.

Un tel procédé, non seulement, augmente la résistance de toute dent dévitalisée, mais aussi repousse plus haut la valeur de la contrainte à partir de laquelle s'ouvre le joint entre la dent et le faux moignon et, en conséquence, recule le seuil à partir duquel la dent peut se briser ou se carier à nouveau.

Il faut ici noter qu'avec ce procédé, la dent dévitalisée peut être conservée sans couronne prothétique. Dans ce cas, la reconstruction de la couronne naturelle est réalisée suivant la technique représentée à la figure 5 mettant en oeuvre des anneaux de fibres 10, 13, 15 inclus dans la résine. Pour produire une bonne anatomie proximale des points de contact corrects et maitriser tout débordement dans le sulcus gingival, une matrice spéciale est utilisée lors de cette reconstitution.

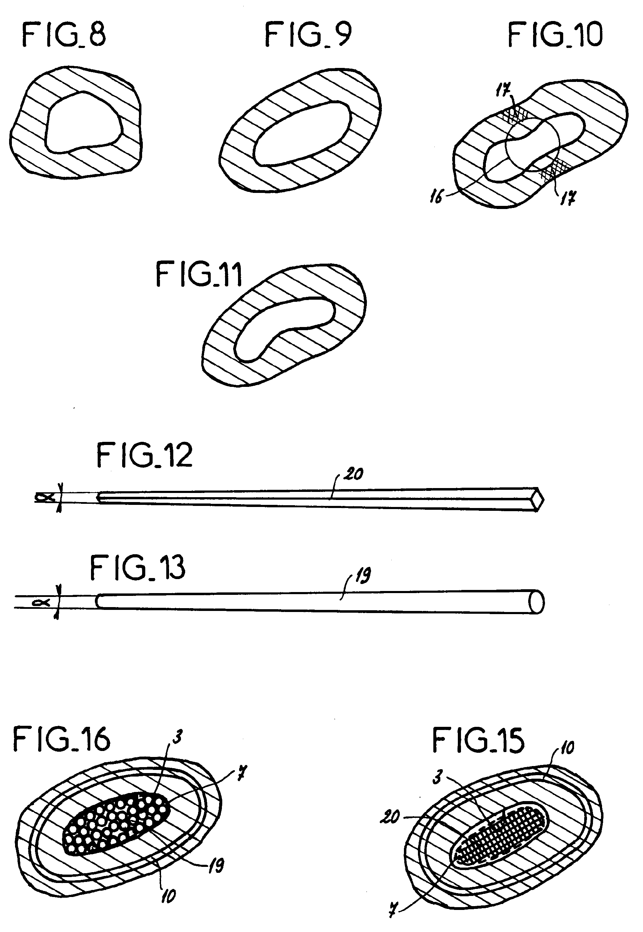

Dans ce qui précède, la construction prothétique est réalisée pour une racine 2 dont la lumière canalaire 3 est localement usinée en 3a par une fraise de forme et dimensions égales à celles du tenon 8 qui sera engagée dans la racine. Une telle construction, pourtant couramment utilisée, met en oeuvre un instrument rotatif qui, lors du fraisage effectué après nettoyage des canaux radiaux 5, provoque le rebouchage de ces canaux et réduit aussi l'ancrage procuré par introduction de la résine dans ces canaux. Par ailleurs, les lumières canalaires ayant, comme le montrent les figures 8 à 11, des formes variables avec parfois des profils convexes, la nécessité de les usiner pour réaliser un puits cylindrique ou tronconique (16 à la figure 10), pour un tenon monobloc de dimensions et formes normalisées, entraine, comme montré en 17 à cette même figure, une réduction de l'épaisseur des parois de la racine et une augmentation de la fragilité de ces parois.

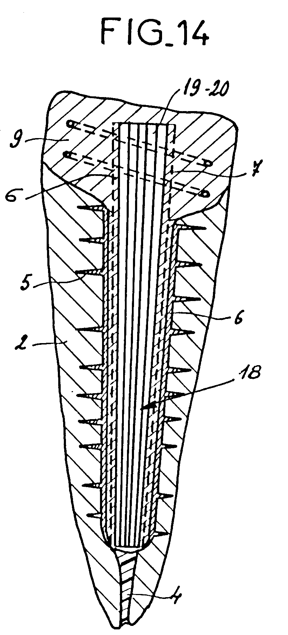

Pour remédier à cela, l'invention propose de remplacer le tenon monobloc 8 par un tenon 18 composé d'un faisceau de segments tronconiques, de section circulaire, comme montré en 19 figure 13 ou de section carrée, comme montré en 20 figure 12. Chacun de ces segments est réalisé en métal ou en matériau composite, a une longueur comprise entre 20 et 25 mm, une dimension transversale entre 0,2 et 0,7 mm et un angle au sommet a compris entre 30 minutes et 1 degré 30 minutes.

Grâce à cela, après nettoyage de la lumière canalaire, mais sans aucun usinage ayant pour but de modifier sa forme et ses dimensions transversales, et après mise en place de la couche de résine 6 dans la lumière et mise en place du fourreau 7 avec son chevelu 7a, un faisceau de segments 19 ou 20 est engagé dans cette lumière de manière à former un ensemble juxtaposé et serré, dont la courbe enveloppe est voisine à celle interne de la lumière dans la même section transversale. Ainsi, après mise en place de la résine 6 de liaison, et comme le montrent les figures 14 à 16, le tenon 18 est constitué par une structure composite, enveloppée par le fourreau déformable 7 et épousant parfaitement la lumière canalaire naturelle 3, à laquelle elle est liée par la résine 6, liant également les fragments tronconiques du faisceau, entre eux et avec le fourreau 7 et son chevelu 7a.

Grâce à cet agencement, le renforcement de la racine par le tenon est maximale, de même que celui procuré par l'inclusion de résine dans les canaux radiaux 5.

Bien entendu, la partie externe du tenon 18 peut, comme dans les formes d'exécution précédentes, servir à la fixation de tous éléments prothétiques connus ou contribuer directement à la reconstruction de la couronne de la dent, cas dans lequel le tenon 18 est associé à des anneaux de fibres 10, 13, 15 avant coulée de la résine 9 ou 6.

## Revendications

1. Prothèse de reconstitution d'une dent dévitalisée du type comprenant d'une part, un tenon destiné à être introduit dans la lumière canalaire de la dent et dont l'extrémité dépassant de celle-ci peut être associée à une reconstitution externe, avec couronne ou similaire, et d'autre part, un fourreau ayant une forme conique, une longueur égale à celle du tenon et s'interposant entre le tenon et la paroi de la lumière canalaire, caractérisée en ce que son fourreau (7) est réalisé en fibres à grande résistance mécanique formant une structure déformable et poreuse à la résine, possède un cheveu externe (7a), et est associé à une résine (6), à faible tension superficielle, apte à recouvrir la paroi de la lumière canalaire (3), à combler les tubuli dentinaires (5), à imprégner les fibres du fourreau (7) et à fixer le tenon (8-18), le fourreau (7) et le chevelu (7a) à l'intérieur de la lumière canalaire (3), en vue de l'obtention d'une structure monobloc composite épousant la lumière canalaire.

2. Prothèse selon la revendication 1, caractérisée en ce que le fourreau (7) possède une structure en fibres, tricotées ou tissées, à mailles poreuses pour la résine (6).

3. Prothèse selon l'une quelconque des revendications 1 et 2, caractérisée en ce que sont solidaires du fourreau (7) des fibres extérieures (7a) formant le chevelu externe.

4. Prothèse selon l'une quelconque des revendications 1 à 3, caractérisée en ce que ses divers composants : résine (6), fourreau (7) avec chevelu (7a) et tenon (8) peuvent être introduits successivement dans la lumière canalaire (3).

5. Prothèse selon l'une quelconque des revendications 1 à 4, caractérisée en ce qu'elle comprend, au niveau de la partie du tenon (8) dépassant de la lumière canalaire 3, et en complément du fourreau (7), des anneaux de fibres (10) entourant cette partie du tenon, noyés dans une résine (9) reconstituant un moignon ou une couronne.

6. Prothèse selon l'une quelconque des revendications 1 à 5, caractérisée en ce que la résine (6), d'obturation des tubuli dentinaires (5) et de liaison du fourreau (7) avec la lumière canalaire (3) et le tenon (8-18), est choisie parmi celles ayant une réticulation anaérobie.

7. Prothèse selon l'une quelconque des revendications 1 à 6, caractérisée en ce que le tenon est composé d'un faisceau de segments, tronconiques (19) ou pyramidaux (20), juxtaposés à l'intérieur du fourreau (7), liés par la résine (6) et répartis dans la lumière canalaire (3) de manière qu'en section transversale leur courbe enveloppe soit voisine de celle de ladite lumière dans la même section transversale.

8. Prothèse selon la revendication 7, caractérisée en ce que chacun des segments (19-20) du faisceau formant tenon possède un angle au sommet compris entre 30 minutes et un degré et 30 minutes.

## Patentansprüche

1. Prothese zur Wiederherstellung eines devitalisierten Zahns, umfassend einerseits einen zum Einführen in das kanalförmige Loch des Zahns bestimmten Zapfen, dessen über den Zahn hinausragendes Ende mit einer äußeren Rekonstitution, z.B. mit Krone oder dergleichen, verbindbar ist,
und andererseits eine sich zwischen dem Zapfen und der Wand des kanalförmigen Lochs einordnende Hülle, welche eine konische Form und die gleiche Länge wie der Zapfen hat,
**dadurch gekennzeichnet, daß**
ihre Hülle (7) aus Fasern großer mechanischer Festigkeit besteht, die eine verformbare und für Harz poröse Struktur bilden, ein äußeres Faserbüschel (7a) aufweist und einem eine geringe Oberflächenspannung aufweisenden Harz (6) zugeordnet ist, welches geeignet ist, die Wand des kanalförmigen Lochs (3) zu bedecken, die Dentinröhrchen (5) auszufüllen, die Fasern der Hülle (7) zu imprägnieren und den Zapfen (8-18), die Hülle (7) und das Büschel (7a) im Inneren des kanalförmigen Lochs (3) zu befestigen, um eine sich an das kanalförmige Loch anschmiegende, einstückige Kompositstruktur zu erhalten.

2. Prothese nach Anspruch 1, **dadurch gekennzeichnet,** daß die Hülle (7) eine Struktur aus gestrickten oder gewebten Fasern mit für das Harz (6) porösen Maschen aufweist.

3. Prothese nach Anspruch 1 oder 2, **dadurch gekennzeichnet,** daß äußere, das äußere Büschel bildende Fasern (7a) mit der Hülle (7) verbunden sind.

4. Prothese nach einem der Ansprüche 1 bis 3, **dadurch gekennzeichnet,** daß
ihre verschiedenen Komponenten: Harz (6), Hülle (7) mit Büschel (7a) und Zapfen (8) nacheinander in das kanalförmige Loch einführbar sind.

5. Prothese nach einem der Ansprüche 1 bis 4, **dadurch gekennzeichnet,** daß
sie in Höhe des das kanalförmige Loch (3) überragenden Abschnitts des Zapfens (8) und zur Ergänzung der Hülle (7) Faserwindungen (10) umfaßt, die diesen Abschnitt des Zapfens umgeben und in einem einen Stumpf oder eine Krone rekonstituierenden Harz (9) eingebettet sind.

6. Prothese nach einem der Ansprüche 1 bis 5, **dadurch gekennzeichnet,** daß
das Harz (6) zum Verschließen der Dentinröhrchen (5) sowie zum Verbinden der Hülle (7) mit dem kanalförmigen Loch (3) und mit dem Zapfen (8-18) unter denjenigen ausgewählt ist, die eine anaerobe Vernetzung haben.

7. Prothese nach einem der Ansprüche 1 bis 6, **dadurch gekennzeichnet,** daß
der Zapfen durch ein Bündel kegelstumpfförmiger (19) oder pyramidenförmiger (20) Segmente gebildet ist, die im Inneren der Hülle (7) aneinandergesetzt sind, durch das Harz (6) verbunden sind und in dem kanalförmigen Loch (3) derart verteilt sind, daß im Querschnitt ihre Umfangslinie derjenigen des Lochs im gleichen Querschnitt benachbart ist.

8. Prothese nach Anspruch 7, **dadurch gekennzeichnet,** daß jedes der Segmente (19-20) des den Zapfen bildenden Bündels an der Spitze einen Winkel zwischen 30 Minuten und einem Grad und 30 Minuten besitzt.

## Claims

1. A prosthesis for reconstructing a devitalised tooth of the type comprising, on the one hand, a tenon intended to be introduced into the pulp cavity of the tooth and of which the projecting end can be associated with an external reconstruction, with a crown or the like, and on the other hand, a sleeve of conical form and length equal to that of the tenon interposed between the tenon and the wall of the pulp cavity, characterised in that its sleeve (7) is made of fibres having a large mechanical resistance forming a structure which is deformable and porous to resin, possesses an external fibrous formation (7a), and is associated with a resin (6) of small surface tension, adapted to cover the wall of the pulp cavity (3), to fill the dentinal tubules (5), to impregnate the fibres of the sleeve (7) and to fix the tenon (8-18), the sleeve (7) and the fibrous formation (7a) to the interior of the pulp cavity (3), with a view to obtaining a composite unitary structure fitting the pulp cavity.

2. A prosthesis according to Claim 1, characterised in that the sleeve (7) has a fibrous structure, woven or knitted, with porous mesh for the resin (6).

3. A prosthesis according to either of Claims 1 and 2, characterised in that exterior fibres (7a) forming the external fibrous formation are rigid with the sleeve (7).

4. A prosthesis according to any one of Claims 1 to 3, characterised in that its various components: resin (6), sleeve (7) with fibrous formation (7a) and tenon (8) can be introduced successively into the pulp cavity (3).

5. A prosthesis according to any one of Claims 1 to 4, characterised in that it comprises, at the level of the part of the tenon (8) extending from the pulp cavity (3), and complementing the sleeve (7), rings of fibres (10) surrounding this part of the tenon, embedded in a resin (9) and reconstituting a stump or a crown.

6. A prosthesis according to any one of Claims 1 to 5, characterised in that the resin (6) filling the dentinal tubules (5) and connecting the sleeve (7) with the pulp cavity (3) and the tenon (8-18) is chosen from among those having an anaerobic reticulated formation.

7. A prosthesis according to any one of Claims 1 to 6, characterised in that the tenon is composed of a bundle of segments, tronconical (19) or pyramidal (20), juxtaposed within the sleeve (7), connected by the resin (6) and distributed in the pulp cavity (3) in such a manner that in transverse section the curve of their envelope is close to that of the pulp cavity in the same transverse section.

8. A prosthesis according to Claim 7, characterised in that each of the segments (19-20) of the bundle forming the tenon has an angle at its apex between 30 minutes and 1 degree 30 minutes.
